# EUROPEAN PATENT APPLICATION

(11) **EP 4 706 406 A1**
(43) Date of publication of application: **11.03.2026**
(21) Application number: 24811289.8
(22) Date of filing: 26.04.2024
(51) Int. Cl.: A23L 23/00, A23C 19/00, A23L 29/212, A23L 29/269

(54) **CHEESE SAUCE COMPOSITION AND MANUFACTURING METHOD THEREFOR**

(30) Priority: 19.05.2023 KR 20230065143
(71) Applicant: CJ Cheiljedang Corporation, Seoul 04560 (KR)
(72) Inventor: CHUNG, Min Ju, Seoul 04560 (KR); PARK, Jun Myoung, Seoul 04560 (KR); YU, Young, Seoul 04560 (KR); PARK, Hongwook, Seoul 04560 (KR); LEE, Chang Yong, Seoul 04560 (KR)
(74) Representative: Meissner Bolte Partnerschaft mbB
(86) International application number: PCT/KR2024/005704
(87) International publication number: WO 2024/242350

(57) **Abstract**

Provided are a cheese sauce composition comprising raw cheese, modified starch, and xanthan gum; a method of preparing a cheese sauce, the method comprising the steps of: (a) obtaining a composition for preparing the cheese sauce by mixing raw cheese, xanthan gum, modified starch, and purified water, (b) heating the composition, and (c) sterilizing the heated composition by retort heating; and a cheese sauce which is prepared by the preparation method.

## Description

### [Technical Field]

The present disclosure relates to a cheese sauce composition; a method of preparing a cheese sauce; and a cheese sauce prepared by the preparation method.

### [Background Art]

The term 'sauce' is derived from the Latin word 'salsus', meaning salted, and collectively refers to a liquid or semi-liquid seasoning that is added to or poured over food to enhance the flavor or color of dishes. To date, a wide variety of sauces is known, each with its own unique characteristics according to country, and these sauces can be categorized in various ways, such as by their intended use, the ingredients they are made from, their color, the use of a base sauce, etc. There are various theories regarding the origin of sauces, but the most plausible theory is that sauces were created to mask the taste of spoiled food in the past when refrigeration was difficult.

Among various sauces, cheese sauce, made with cheese and other ingredients such as flour or milk, is a sauce that imparts a cheesy flavor and is used in a variety of dishes. Cheese sauce is commonly used as a sauce for meat, fried, and fish dishes, and also as a topping for various fast foods like chicken, pizza, and hamburgers, etc. Because of these characteristics, there is a tendency to prefer high-consistency cheese sauces that provide a gooey texture without running down. Therefore, consistency formation, particularly, ensuring that consistency and shape are maintained even after cooking by heating, is one of the key challenges in the preparation of cheese sauce.

Traditionally, research has been conducted to achieve the appropriate consistency of cheese sauce. For example, International Patent Publication No. WO 2016-031953 A1 discloses a cheese sauce composition that is improved in terms of workability and emulsion stability, etc. by comprising a lipophilic emulsifier and water. As described, in most traditional cheese sauce compositions, additives to enhance physical properties, such as emulsifiers, etc., are used. However, the use of emulsifiers poses problems due to their negative health effects.

In view of this background, the present inventors conducted extensive efforts to solve the above-mentioned problems, and as a result, they found that it is possible to provide a high-consistency, gooey cheese sauce that readily maintains consistency and shape even during cooking by heating without comprising an emulsifier, by blending modified starch and xanthan gum, thereby completing the present disclosure.

### [Disclosure]

### [Technical Problem]

A problem to be solved by the present disclosure is to provide a cheese sauce composition comprising raw cheese, modified starch, and xanthan gum, and a method of preparing the same.

### [Technical Solution]

An object of the present disclosure is to provide a cheese sauce composition comprising raw cheese, modified starch, and xanthan gum.

Another object of the present disclosure is to provide a method of preparing a cheese sauce, the method comprising the steps of: (a) obtaining a composition for preparing the cheese sauce by mixing raw cheese, xanthan gum, modified starch, and purified water, (b) heating the composition, and (c) sterilizing the heated composition by retort heating.

Still another object of the present disclosure is to provide a cheese sauce which is prepared by the method of preparing the cheese sauce.

### [Advantageous Effects]

A cheese sauce composition of the present disclosure comprises xanthan gum and modified starch, which are combined in specific amounts, and therefore, it is possible to provide a high-consistency cheese sauce composition that readily forms a consistency without comprising emulsifiers and further exhibits excellent shape and consistency retention even after cooking by high-temperature heating.

Furthermore, the cheese sauce of the present disclosure has remarkably improved consistency stability, emulsion stability, and storage stability, and also exhibits superior sensory properties, which allows for long-term storage while retaining excellent flavor, texture, and consistency. Accordingly, it is possible to provide an emulsifier-free cheese sauce for consumers who are averse to various additives, and the cheese sauce also maintains its shape, flavor, and consistency even after cooking by heating, thereby being usefully applied as a topping for various foods such as hamburgers, chicken, and pizza, etc.

### [Brief Description of the Drawings]

FIG. 1 shows the appearance of each sauce composition of Experimental Examples after cooking by heating in an experiment of Example 2;
FIG. 2 shows the appearance of each sauce centrifuged for emulsion stability evaluation in an experiment of Example 3;
FIG. 3 shows the results of specific low-temperature storage under sterilization conditions at 112°C for 30 minutes in an experiment of Example 7; and
FIG. 4 shows a schematic illustration of a method of preparing a cheese sauce according to one exemplary embodiment of the present disclosure.

### [Detailed Description of Preferred Embodiments]

The present disclosure will be described in detail as follows. Meanwhile, each description and embodiment disclosed in this disclosure may also be applied to other descriptions and embodiments. That is, all combinations of various elements disclosed in this disclosure fall within the scope of the present disclosure. Further, the scope of the present disclosure is not limited by the specific description described below. Further, a number of papers and patent documents are referenced and cited throughout this specification. The disclosures of the cited papers and patent documents are incorporated herein by reference in their entirety to further clarify the level and scope of the subject matter to which the present disclosure pertains.

An aspect of the present disclosure provides a cheese sauce composition comprising raw cheese, modified starch, and xanthan gum.

As used herein, the term "cheese sauce" refers to a sauce or syrup with a cheese flavor.

The composition for preparing a cheese sauce of the present disclosure has one key characteristic in that a high-consistency cheese sauce forming a gooey consistency without comprising emulsifiers may be provided through blending raw cheese with a combination of modified starch and xanthan gum, thereby increasing product applicability, and having excellent consistency and shape retention even during cooking by heating.

As used herein, the term "raw cheese" refers to a cheese component that is the main ingredient of the cheese sauce of the present disclosure. Specifically, the raw cheese may comprise, but is not limited to, Cheddar cheese, Grana Padano cheese, Mozzarella cheese, Ricotta cheese, Camembert cheese, Emmental cheese, Gruyère cheese, cottage cheese, other processed cheeses, or combinations thereof. Specifically, the raw cheese may be, but is not limited to, a combination of Cheddar cheese and Grana Padano cheese.

The raw cheese may be comprised in an appropriate amount in the cheese sauce composition, specifically, 3 parts by weight to 30 parts by weight, based on the total 100 parts by weight of the cheese sauce composition, more specifically, 6 parts by weight to 27 parts by weight, 10 parts by weight to 25 parts by weight, 13 parts by weight to 27 parts by weight, 15 parts by weight to 25 parts by weight, 20 parts by weight to 28 parts by weight, 13 parts by weight to 22 parts by weight, 16 parts by weight to 23 parts by weight, 18 parts by weight to 22 parts by weight, 17 parts by weight to 21 parts by weight, and 20 parts by weight to 25 parts by weight, based on the total 100 parts by weight of the cheese sauce composition, but is not limited thereto.

As used herein, the term "modified starch" refers to a chemically modified form of starch, resulting from a reaction between hydroxyl groups of starch and reactive substances through treatment of starch derived from grains or rhizomes with a small amount of chemical substances, or refers to a gelatinized form thereof. Specifically, the modified starch may comprise, but is not limited to, tapioca modified starch, potato modified starch, corn modified starch, wheat modified starch, and dextrin, etc. More specifically, the modified starch may be tapioca modified starch.

The modified starch may be comprised in an amount of 0.1 part by weight to 5 parts by weight, based on the total 100 parts by weight of the cheese sauce composition.

Specifically, the modified starch may be comprised in the cheese sauce composition in an amount ranging from a lower limit selected from 0.1 part by weight, 0.2 parts by weight, 0.3 parts by weight, 0.4 parts by weight, 0.5 parts by weight, 0.6 parts by weight, 0.7 parts by weight, 0.8 parts by weight, 0.9 parts by weight, 1 parts by weight, 1.1 parts by weight, 1.2 parts by weight, 1.3 parts by weight, 1.4 parts by weight, 1.5 parts by weight, 1.6 parts by weight, 1.7 parts by weight, 1.8 parts by weight, 1.9 parts by weight, 2 parts by weight, 2.1 parts by weight, 2.2 parts by weight, 2.3 parts by weight, 2.4 parts by weight, 2.5 parts by weight, 2.6 parts by weight, 2.7 parts by weight, 2.8 parts by weight, 2.9 parts by weight, and 3 parts by weight, and/or an upper limit selected from 5 parts by weight, 4.9 parts by weight, 4.8 parts by weight, 4.7 parts by weight, 4.6 parts by weight, 4.5 parts by weight, 4.4 parts by weight, 4.3 parts by weight, 4.2 parts by weight, 4.1 parts by weight, 4 parts by weight, 3.9 parts by weight, 3.8 parts by weight, 3.7 parts by weight, 3.6 parts by weight, 3.5 parts by weight, 3.4 parts by weight, 3.3 parts by weight, 3.2 parts by weight, 3.1 parts by weight, and 3 parts by weight.

For example, the modified starch may be comprised in an amount of 0.5 parts by weight to 4 parts by weight, more specifically, 0.5 parts by weight to 3.5 parts by weight, 1 part by weight to 3.5 parts by weight, 1.5 parts by weight to 4 parts by weight, 1.7 parts by weight to 3.8 parts by weight, 2.3 parts by weight to 3.8 parts by weight, 2.5 parts by weight to 3.8 parts by weight, 2.7 parts by weight to 3.7 parts by weight, 2.6 parts by weight to 3.3 parts by weight, 2.5 parts by weight to 3.6 parts by weight, 2.8 parts by weight to 3.4 parts by weight, 2.7 parts by weight to 3.1 parts by weight, or 2.6 parts by weight to 3 parts by weight, and much more specifically, 2.5 parts by weight to 3.5 parts by weight, based on the total 100 parts by weight of the cheese sauce composition, but is not limited thereto.

As used herein, the term "xanthan gum" refers to a gum produced by oxidation of glucose by the strain *Xanthomonas campestris,* and is used as a consistency enhancer and stabilizer.

The xanthan gum may be comprised in an amount of 0.01 part by weight to 0.3 parts by weight, based on the total 100 parts by weight of the cheese sauce composition.

Specifically, the xanthan gum may be comprised in the cheese sauce composition in an amount ranging from a lower limit selected from 0.01 part by weight, 0.02 parts by weight, 0.03 parts by weight, 0.04 parts by weight, 0.05 parts by weight, 0.06 parts by weight, 0.07 parts by weight, 0.08 parts by weight, and 0.09 parts by weight, and/or an upper limit selected from 0.25 parts by weight, 0.24 parts by weight, 0.23 parts by weight, 0.22 parts by weight, 0.21 parts by weight, 0.2 parts by weight, 0.19 parts by weight, 0.18 parts by weight, 0.17 parts by weight, 0.16 parts by weight, 0.15 parts by weight, 0.14 parts by weight, 0.13 parts by weight, 0.12 parts by weight, 0.11 parts by weight, and 0.1 parts by weight.

For example, the xanthan gum may be comprised in an amount of 0.01 part by weight to 0.2 parts by weight, more specifically, 0.03 parts by weight to 0.15 parts by weight, 0.04 parts by weight to 0.14 parts by weight, 0.05 parts by weight to 0.13 parts by weight, 0.07 parts by weight to 0.14 parts by weight, 0.08 parts by weight to 0.14 parts by weight, 0.04 parts by weight to 0.1 part by weight, 0.05 parts by weight to 0.12 parts by weight, or 0.06 parts by weight to 0.13 parts by weight, and much more specifically, 0.06 parts by weight to 0.12 parts by weight, but is not limited thereto.

The composition for preparing the cheese sauce of the present disclosure has a main technical feature of comprising a combination of modified starch and xanthan gum. In one embodiment of the present disclosure, it was confirmed that when 2.5 parts by weight to 3.5 parts by weight of modified starch and 0.06 parts by weight to 0.12 parts by weight of xanthan gum were blended, based on the total 100 parts by weight of the cheese sauce composition, a gooey consistency of the cheese sauce is formed without comprising a separate additive such as an emulsifier, etc., and the shape and consistency were easily maintained even during cooking by heating.

The modified starch and xanthan gum may be comprised at a weight ratio of 1 : 0.015 to 0.05, more specifically, 1 : 0.017 to 0.048, but are not limited thereto.

The cheese sauce composition of the present disclosure may further comprise dairy products in addition to cheese. In this regard, as used herein, the term "dairy products" should be understood to mean dairy products other than cheese, due to the feature of the present disclosure, and may specifically comprise, but are not limited to, milk, edible oils, cream, whipped cream, sour cream, custard cream, butter cream, condensed milk, etc.

The dairy products other than cheese may be comprised in an amount of 30 parts by weight to 70 parts by weight, specifically, 35 parts by weight to 60 parts by weight, and more specifically, 40 parts by weight to 55 parts by weight, 50 parts by weight to 70 parts by weight, 45 parts by weight to 60 parts by weight, 50 parts by weight to 65 parts by weight, 55 parts by weight to 70 parts by weight, 60 parts by weight to 75 parts by weight, 55 parts by weight to 65 parts by weight, 50 parts by weight to 60 parts by weight, or 60 parts by weight to 70 parts by weight, based on the total 100 parts by weight of the cheese sauce composition, but are not limited thereto.

The cheese sauce composition of the present disclosure may further comprise sugar, salt, spices, coloring agents, or a combination thereof.

The sugar may be comprised in the cheese sauce composition in an appropriate amount of, for example, 1 part by weight to 15 parts by weight, based on the total 100 parts by weight of the cheese sauce composition, and in a specific embodiment, 5 parts by weight to 13 parts by weight, or in a more specific embodiment, 8 parts by weight to 10 parts by weight, but is not limited thereto.

The salt may be comprised in the cheese sauce composition in an appropriate amount of, for example, 0.5 parts by weight to 5 parts by weight, based on the total 100 parts by weight of the cheese sauce composition, and in a specific embodiment, 1.5 parts by weight to 2.5 parts by weight, but is not limited thereto.

The spices may be added to the cheese sauce in order to impart aroma and flavor. Examples thereof may comprise, but are not limited to, mustard, cayenne pepper, or a combination thereof.

The coloring agent is not limited, as long as it may be any ingredient used in the food industry to impart a color suitable for cheese sauce. Examples thereof may comprise a gardenia yellow pigment, an oleoresin paprika extract pigment, or a combination thereof.

The cheese sauce composition of the present disclosure may further comprise purified water. The purified water may be comprised in the cheese sauce composition in an appropriate amount of, for example, 5 parts by weight to 30 parts by weight, and in a specific embodiment, 10 parts by weight to 15 parts by weight, but is not limited thereto.

The cheese sauce composition of the present disclosure may further comprise corn syrup, fructose, soy sauce, vinegar, wheat flour, seasoning, monosodium L-glutamate, vitamins, electrolytes, stabilizers, emulsifiers, acidity regulators, preservatives, flavoring agents, coloring agents, etc.

The cheese sauce composition of the present disclosure may be characterized by not comprising an emulsifier. As used herein, the term "emulsifier" means a substance that allows two immiscible liquids to be stably mixed. Non-limiting examples of emulsifiers comprise glycerin fatty acid ester, sucrose fatty acid ester, sorbitan fatty acid ester, propylene glycol fatty acid ester, soybean phospholipid, stearyl calcium lactate, etc. Traditional cheese sauce products secured consistency and storage stability by using emulsifiers such as glycerin fatty acid ester, etc., but have a problem of a harmful effect on the human body. Accordingly, it was found that the cheese sauce composition of the present disclosure, unlike the existing cheese sauce comprising an emulsifier, may provide a high-consistency cheese sauce which may easily maintain characteristic consistency of a thick cheese sauce even when cooked at room temperature and a high temperature even without comprising an emulsifier and may have excellent storage stability by deriving a combination of modified starch and xanthan gum and the optimal blending thereof.

The cheese sauce composition of the present disclosure may exhibit a high consistency of approximately 2 cm/30 sec to 6.5 cm/30 sec, based on a value measured at 25°C, thereby providing a high-consistency sauce with low flowability and high stickiness. Specifically, the cheese sauce of the present disclosure may be a high-consistency cheese sauce exhibiting a consistency of 2 cm/30 sec to 4.5 cm/30 sec, based on the consistency before cooking, and a consistency of 4 cm/30 sec to 6.5 cm/30 sec, based on the consistency after cooking.

The consistency of the cheese sauce composition of the present disclosure may be 2 cm/30 sec to 4.5 cm/30 sec, specifically, 2.5 cm/30 sec to 4.0 cm/30 sec, and the consistency means those measured, based on the consistency before cooking. Specifically, the consistency of the cheese sauce composition may be in the range consisting of a lower limit selected from 2.0 cm/30 sec, 2.3 cm/30 sec, 2.5 cm/30 sec, 2.6 cm/30 sec, 2.7 cm/30 sec, 2.8 cm/30 sec, 2.9 cm/30 sec, and 3.0 cm/30 sec, and/or an upper limit selected from 4.5 cm/30 sec, 4.4 cm/30 sec, 4.3 cm/30 sec, 4.2 cm/30 sec, 4.1 cm/30 sec, 4.0 cm/30 sec, 3.9 cm/30 sec, 3.8 cm/30 sec, 3.7 cm/30 sec, 3.6 cm/30 sec, 3.5 cm/30 sec, 3.4 cm/30 sec, 3.3 cm/30 sec, 3.2 cm/30 sec and 3.1 cm/30 sec.

As used herein, the consistency refers to the distance traveled by the sauce in a consistometer for 30 seconds, and means a flow consistency, and specifically, means those measured at room temperature, for example, at 20°C to 30°C, and more specifically, at 25°C. In this regard, the consistency shows the viscosity of the cheese sauce, and as the cheese sauce has a lower consistency, its stickiness decreases and fluidity increases, which means that the convenience of use is enhanced.

Further, the cheese sauce composition of the present disclosure may have a consistency of 4 cm/30 sec to 6.5 cm/30 sec, specifically, 4.5 cm/30 sec to 6 cm/30 sec after cooking. The cheese sauce composition of the present disclosure may have a consistency in the above range after cooking, thereby providing a high-consistency cheese sauce composition and a high-consistency cheese sauce.

Specifically, the post-cooking consistency of the cheese sauce composition may be in the range consisting of a lower limit selected from 4.5 cm/30 sec, 4.6 cm/30 sec, 4.7 cm/30 sec, 4.8 cm/30 sec, 4.9 cm/30 sec, 5.0 cm/30 sec, 5.1 cm/30 sec, 5.2 cm/30 sec, and 5.3 cm/30 sec, and/or an upper limit selected from 6.5 cm/30 sec, 6.4 cm/30 sec, 6.3 cm/30 sec, 6.2 cm/30 sec, 6.1 cm/30 sec, 6.0 cm/30 sec, 5.9 cm/30 sec, 5.8 cm/30 sec, 5.7 cm/30 sec, 5.6 cm/30 sec, 5.5 cm/30 sec and 5.4 cm/30 sec.

In this regard, the cooking by heating refers to cooking by heating the cheese sauce composition when used in actual cooking. A non-limiting example may refer to cooking by heating at 80°C to 120°C. In a more specific example, the consistency may refer to a consistency measured after cooking in an oven at 100°C for 1 hour, but is not limited thereto. When the consistency and the post-cooking consistency of the cheese sauce composition fall within the above ranges, the sauce maintains appropriate flowability, and thus topping of a food product with the sauce is easy, and a thick texture may be exhibited.

The cheese sauce composition of the present disclosure may be used as a food topping because it has a thick consistency even after being cooked by heating without the addition of an emulsifier. The cheese sauce composition of the present disclosure may be applied to various foods, and in one exemplary embodiment, it may be, but is not limited to, a cheese sauce composition for hamburger or a cheese sauce composition for pizza.

Another aspect of the present disclosure provides a method of preparing a cheese sauce, the method comprising the steps of: (a) obtaining a composition for preparing the cheese sauce by mixing raw cheese, xanthan gum, modified starch, and purified water, (b) heating the composition, and (c) sterilizing the heated composition by retort heating.

The step (a) is a step of preparing a mixture by adding respective ingredients for preparing a cheese sauce. The raw cheese, xanthan gum, modified starch, and purified water, which are the ingredients of the cheese sauce composition, may be mixed sequentially, in reverse order, or simultaneously.

In this regard, the cheese sauce composition is defined as described above, and the ingredients may further comprise dairy products, sugar, salt, spices, coloring agents, or a combination thereof, in addition to cheese. The raw cheese, xanthan gum, modified starch, and purified water are defined as described above.

In one embodiment, the modified starch and xanthan gum may be comprised in an amount of 2.5 parts by weight to 3.5 parts by weight and 0.06 parts by weight to 0.12 parts by weight, respectively, based on the total 100 parts by weight of the cheese sauce composition, as described above.

In one embodiment, the step (a) may comprise, but is not limited to, the steps of (a-1) preparing a mixture by introducing raw cheese and xanthan gum into purified water, (a-2) heating the mixture obtained in the step (a-1), and (a-3) introducing modified starch, Cheddar cheese, and the remaining amount of purified water into the heated mixture. In the preparation method of the present disclosure, by adjusting the order of introducing respective raw materials and performing the homogenization step described below, it is possible to prepare a cheese sauce with a thick consistency while well preserving the cheese component.

In this regard, the step (a-1) may comprise introducing one or more selected from the group consisting of dairy products, sugar, salt, spices, and coloring agents, in addition to cheese.

Specifically, in the step (a-2), the heating may be to raise the temperature to 60°C to 80°C. More specifically, in the step (a-2), the heating may be to raise the temperature in a range consisting of a lower limit selected from 60°C, 61°C, 62°C, 63°C, 64°C, 65°C, 66°C, 67°C, 68°C, 69°C, and 70°C, and/or an upper limit selected from 80°C, 79°C, 78°C, 77°C, 76°C, 75°C, 74°C, 73°C, 72°C, 71°C, and 70°C.

For example, in the step (a-2), the heating may mean raising the temperature to 65°C to 80°C, 70°C to 80°C, 60°C to 75°C, 62°C to 72°C, 66°C to 78°C or 65°C to 75°C, and more specifically, raising the temperature to 70°C, but is not limited thereto. When the method of preparing the cheese sauce of the present disclosure comprises the step (a-2), this may be referred to as a primary heating step.

The step (a-3) refers to a step of introducing modified starch, Cheddar cheese, and the remaining amount of purified water into the heated mixture of the step (a-2) and mixing the same. In the preparation method of the present disclosure, a mixture of raw cheeses excluding Cheddar cheese is first heated in the steps (a-1) and (a-2), and then Cheddar cheese is sequentially introduced in the step (a-3), thereby ensuring that the Cheddar cheese does not deteriorate and remains fresh during the homogenization process.

In this regard, the step (a) may optionally further comprise a stirring and/or homogenization step to facilitate mixing, after introducing respective materials or part of the materials. The homogenization refers to a process of finely breaking down and evenly distributing particles, and may utilize a method known in the art. Specifically, the homogenization may utilize a homomixer or a homogenizer, but is not limited thereto.

In one embodiment, the step (a) may additionally perform a stirring and homogenization step at any one or more of the following points: after the step (a-1), after the step (a-2), and after the step (a-3).

Specifically, the homogenization may be performed at 1300 rpm to 1700 rpm, more specifically, at 1500 rpm, but is not limited thereto.

Specifically, the homogenization may be performed for 1 minute to 5 minutes, more specifically, for 2 minutes, but is not limited thereto.

As described, the step (a) is performed to blend the respective ingredients, thereby preparing the cheese sauce composition.

The step (b) is a step of heating the composition obtained in the step (a). In this regard, when the method of preparing the cheese sauce of the present disclosure comprises the step (a-2), i.e., the primary heating step, the step (b) may be referred to as a secondary heating step.

Specifically, in the step (b), the heating may be to raise the temperature to 50°C to 90°C. More specifically, in the step (b), the heating may be to raise the temperature in a range consisting of a lower limit selected from 50°C, 53°C, 55°C, 57°C, 60°C, 61°C, 62°C, 63°C, 64°C, 65°C, 66°C, 67°C, 68°C, 69°C, 70°C, 71°C, 72°C, 73°C, 74°C, and 75°C, and/or an upper limit selected from 90°C, 89°C, 88°C, 87°C, 86°C, 85°C, 84°C, 83°C, 82°C, 81°C, 80°C, 79°C, 78°C, 77°C, 76°C, and 75°C.

For example, in the step (b), the heating may mean raising the temperature to 55°C to 85°C, 60°C to 85°C, 55°C to 80°C, 55°C to 75°C, 58°C to 82°C, 60°C to 80°C 70°C to 85°C, 70°C to 80°C, 65°C to 75°C, 72°C to 82°C or 75°C to 85°C. In one embodiment of the present disclosure, it was confirmed that when the composition is heated to the above temperature range before sterilization, the modified starch comprised in the cheese sauce composition is stably gelatinized, and it has consistency stability and emulsion stability, and has good sensory properties without browning.

Specifically, in the step (b), the heating means gradually raising the temperature of the mixture to the target heating temperature, and in this regard, the temperature may be gradually raised for 40 minutes to 60 minutes, but is not limited thereto.

The step (c) refers to a step of transferring and packing the composition which is heated in the step (b) and sterilizing the composition by retort heating.

As used herein, the term "sterilizing by retort heating" refers to packing and sealing a pre-made food in a packaging material, heating the same while still packaged, and sterilizing the same by heating to kill microorganisms and to allow long-term storage.

Specifically, the sterilization by retort heating in the step (c) may be performed at 110°C to 120°C.

More specifically, the sterilization by retort heating in the step (c) may be performed at a temperature in a range consisting of a lower limit selected from 110°C, 111°C, 112°C, 113°C, and 114°C, and/or an upper limit selected from 120°C, 119°C, 118°C, 117°C, 116°C, 115°C, and 114°C, 113°C, and 112°C.

More specifically, it may be performed at 110°C to 118°C, 110°C to 116°C, 110°C to 115°C, 110°C to 113°C, 110°C to 112°C, or 112°C to 114°C. In one embodiment of the present disclosure, the storage stability of cheese sauce according to sterilization conditions was studied. As a result, it was confirmed that when sterilization by retort heating is performed within the above temperature range, microbial and physicochemical stability is secured, enabling long-term storage under refrigeration, thereby remarkably improving the storage stability of cheese sauce.

Specifically, the sterilization by retort heating in the step (c) may be performed for 10 minutes to 60 minutes, and more specifically, for 20 minutes to 40 minutes, but is not limited thereto.

In the step (c), the consistency of the cheese sauce composition prepared through the sterilization by retort heating may be 2 cm/30 sec to 4.5 cm/30 sec, specifically 2.5 cm/30 sec to 4.0 cm/30 sec, based on the consistency before cooking by heating. Since the cheese sauce composition of the present disclosure has the above consistency before cooking by heating as described above, it may be a high-consistency cheese sauce composition, and when the consistency of the cheese sauce composition falls within the above range, the flowability is appropriately maintained, making it easy to apply and top the sauce on food, and achieving a thick texture.

By performing a series of steps as described above, the cheese sauce of the present disclosure is finally obtained. The method of preparing the cheese sauce of the present disclosure has the main technical feature of being able to provide a high-consistency cheese sauce with excellent consistency, consistency stability during cooking by heating, storage stability, and sensory properties without adding a separate emulsifier.

Still another aspect of the present disclosure provides a cheese sauce, which is prepared by the method of preparing the cheese sauce.

In this regard, the cheese sauce is characterized by not comprising an emulsifier. Furthermore, the cheese sauce is characterized in that it has remarkably improved consistency stability, emulsion stability, and storage stability upon heating while exhibiting the characteristic gooey texture of cheese sauce.

Furthermore, since the cheese sauce of the present disclosure has improved storage stability, its long-term storage is possible. In one embodiment of the present disclosure, it was confirmed that the cheese sauce maintains stability against microbes and physicochemical properties even after long-term storage. Therefore, the cheese sauce of the present disclosure may be characterized in that a shelf life is 30 days or more, specifically, 60 days or more, and more specifically, 90 days or more, based on refrigerated storage.

Still another aspect of the present disclosure provides use of the composition comprising raw cheese, modified starch, and xanthan gum in preparing a cheese sauce.

Still another aspect of the present disclosure provides use of the cheese sauce composition comprising raw cheese, modified starch, and xanthan gum in preparing a food topping.

Still another aspect of the present disclosure provides use of the cheese sauce composition comprising raw cheese, modified starch, and xanthan gum in preparing a hamburger sauce or a pizza sauce.

### [Mode for Carrying Out the Invention]

Hereinafter, the present disclosure will be described in more detail by way of exemplary embodiments. These exemplary embodiments are intended to more specifically illustrating the present disclosure, and the scope of the present disclosure is not limited by these exemplary embodiments.

### Example 1: Preparation of Cheese Sauce

In the preparation of cheese sauce, the following ingredients were used and mixed in the amounts shown in Table 1 below. In detail, the content of each sample of dairy products comprising milk, cream, and condensed milk, cheeses comprising Cheddar cheese, Grana Padano cheese, and processed cheese, and other raw materials comprising sugar, salt, coloring and seasonings, etc. was indicated. The sources of respective ingredients used are as follows: milk (Seoul Milk, Korea), cream (Sungwon F&B, Germany), condensed milk (Myeongga Dairy, Korea), sugar (CJ CheilJedang, Korea), modified starch (Matsudani Korea, Thailand), Grana Padano cheese (Goomi F&B, Italy), Cheddar cheese (Kingsco, USA), refined salt (Hanju, Korea), processed cheese (Dairyzen, Korea), Dijon mustard (Sammi MF, USA), plant-based fermented extract (CJ CheilJedang, Indonesia), cayenne pepper (TRI, Korea), gardenia yellow pigment (Dobe Industrial, Korea), xanthan gum (MSC, Korea), oleoresin paprika extract pigment (Casein Bio, India).

**[Table 1]**

| Sample name | Modified starch | Xanthan gum | Dairy products | Cheeses | Other raw materials | Purified water |
|---|---|---|---|---|---|---|
| Comparative Example 1 | 0 | 0.12 | 50 | 21.4 | 13.884 | 14.596 |
| Comparative Example 2 | 0 | 0.06 | 50 | 21.4 | 13.884 | 14.71 |
| Comparative Example 3 | 0 | 0 | 50 | 21.4 | 13.884 | 14.716 |
| Experimental Example 1 | 1.5 | 0.12 | 50 | 21.4 | 13.884 | 13.096 |
| Experimental Example 2 | 1.5 | 0.06 | 50 | 21.4 | 13.884 | 13.156 |
| Experimental Example 3 | 2.5 | 0.12 | 50 | 21.4 | 13.884 | 12.096 |
| Experimental Example 4 | 2.5 | 0.06 | 50 | 21.4 | 13.884 | 12.156 |
| Experimental Example 5 | 2.75 | 0.12 | 50 | 21.4 | 13.884 | 11.846 |
| Experimental Example 6 | 3.5 | 0.12 | 50 | 21.4 | 13.884 | 11.096 |
| Experimental Example 7 | 3.5 | 0.06 | 50 | 21.4 | 13.884 | 11.156 |

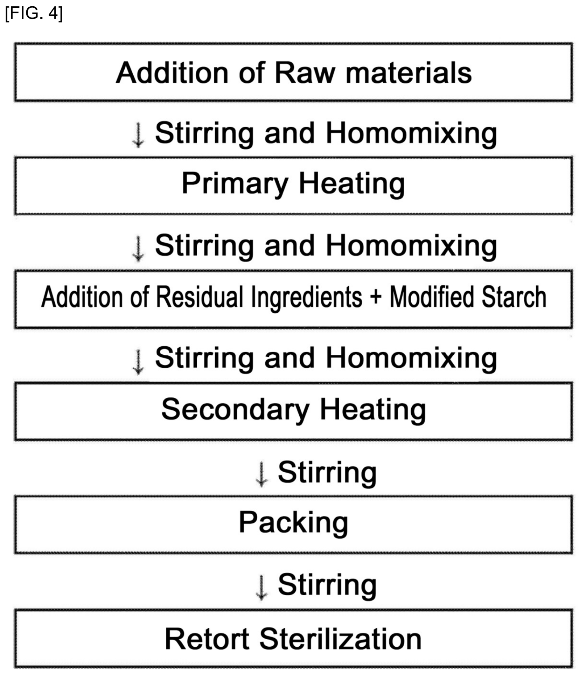

In detail, raw cheese, excluding dairy products and Cheddar cheese, was introduced into a predetermined amount of water, followed by stirring and homogenizing at 1500 rpm for 2 minutes. Subsequently, xanthan gum and Cheddar cheese were introduced, stirred, and homogenized at 1500 rpm for 2 minutes. The primary heating was performed to 70°C, followed by stirring. Thereafter, the remaining amount of water and modified starch were introduced, and then homogenized at 1500 rpm, and then the secondary heating was performed, followed by stirring. After reaching 80°C, the prepared composition was analyzed, transferred to a service tank, stirred, and packed. Thereafter, retort sterilization was performed at 112°C for 30 minutes to prepare a cheese sauce composition of the present disclosure. The method of preparing a high-consistency cheese sauce according to one embodiment is schematically shown in FIG. 4.

### Example 2: Cheese Sauce Consistency, Post-Cooking Consistency and Degree of Post-Cooking Shape Retention

It was intended to measure the consistency of the cheese sauces of Experimental Examples 1 to 7, which were prepared in Example 1. 100 g of the sauce was placed in a consistometer (Bostwick) at 25°C, and the distance traveled by the sauce (cm) in 30 sec was measured to calculate consistency (cm/30 sec). In detail, it was confirmed that when the cheese sauce exhibits a consistency of 2.5 cm/30 sec to 4.0 cm/30 sec and a post-cooking consistency of 4.5 cm/30 sec to 6.0 cm/30 sec, it retains its gooey texture while easily maintaining consistency and shape during cooking by heating. Therefore, it was aimed to develop a cheese sauce exhibiting a consistency in the above range.

Next, it was intended to measure the post-cooking consistency and the degree of post-cooking shape retention of the cheese sauce. The prepared sauces were each cooked in an oven at 100°C for 60 minutes, and then 100 g thereof was placed in a consistometer at an actual temperature of 70°C. The distance traveled by the sauce in 30 sec was measured.

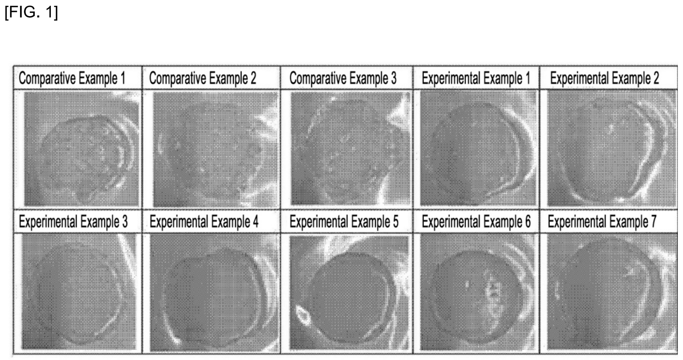

The results of evaluating the consistency, and the post-cooking consistency and post-cooking shape retention are summarized in Table 2 below, and the post-cooking shape of each sauce composition of Experimental Examples is shown in FIG. 1.

**[Table 2]**

| Sample name | Modified starch (%) | Xanthan gum (%) | Consist ency (cm) | Degree of consistency formation | Post-cooking consistency (cm) | Post-cooking shape retention |
|---|---|---|---|---|---|---|
| Comparative Example 1 | 0 | 0.12 | Not measur able | ○ rarely formed | Not measurable | X not formed |
| Comparative Example 2 | 0 | 0.06 | Not measur able | ○ rarely formed | Not measurable | X not formed |
| Comparative Example 3 | 0 | 0 | Not measur able | o rarely formed | Not measurable | X not formed |
| Experimental Example 1 | 1.5 | 0.12 | 10 | **••(2** points/5 points) | 15 | • (1 point/5 points) |
| Experimental Example 2 | 1.5 | 0.06 | 11 | **•(1** point/5 points) | 13.5 | ○ rarely formed |
| Experimental Example 3 | 2.5 | 0.12 | 5 | **•••(3** points/5 points) | 7.5 | •• (2 points/5 points) |
| Experimental Example 4 | 2.5 | 0.06 | 6.5 | **•••(3** points/5 points) | 8.5 | •• (2 points/5 points) |
| Experimental Example 5 | 2.75 | 0.12 | 3.5 | **••••(4** points/5 points) | 5.5 | •••• (4 points/5 points) |
| Experimental Example 6 | 3.5 | 0.12 | 2.5 | **•••••(5** points/5 points) | 4.5 | •••• (4 points/5 points) |
| Experimental Example 7 | 3.5 | 0.06 | 3 | **••••(4** points/5 points) | 5 | •••• (4 points/5 points) |

As shown in Table 2 and FIG. 1, Comparative Examples 1 to 3, which did not comprise the combination of modified starch and xanthan gum, failed to form a consistency, and thus consistency measurement itself was impossible. Unsurprisingly, after cooking by heating, consistency was not formed and the shape was not maintained.

In contrast, it was confirmed that Experimental Examples 1 to 7, which comprised the combination of xanthan gum and modified starch, all formed sauce consistency and maintained their shape even after cooking by heating. These results confirm that the use of modified starch and xanthan gum in combination is essential for forming an appropriate consistency in the cheese sauce and maintaining its shape after cooking by heating. In particular, Experimental Examples 3 to 7 comprising 2.5 wt% to 3.5 wt% of modified starch and 0.06 wt% to 0.12 wt% of xanthan gum showed a consistency of 2.5 cm/30 sec to 4.0 cm/30 sec and a post-cooking consistency of 4.5 cm/30 sec to 6.0 cm/30 sec, confirming that they retain a gooey texture while maintaining well the consistency and shape even after cooking by heating.

### Example 3: Emulsion Stability and Sensory Evaluation of Cheese Sauce

Subsequently, it was intended to evaluate the emulsion stability of the cheese sauces of Experimental Examples 1 to 7 which were prepared in Example 1. 40 g of each sauce of Experimental Examples 1 to 10 was placed in a conical tube and centrifuged at 3,000 rpm for 10 minutes to observe the properties.

Further, a sensory evaluation was conducted on the cheese sauces of Experimental Examples 1 to 7 which were prepared in Example 1. To determine the mouthfeel of the cheese sauces according to their flavor and consistency formation after cooking by heating, a panel of 5 members tasted each experimental group and conducted a sensory evaluation using a 5-point scale.

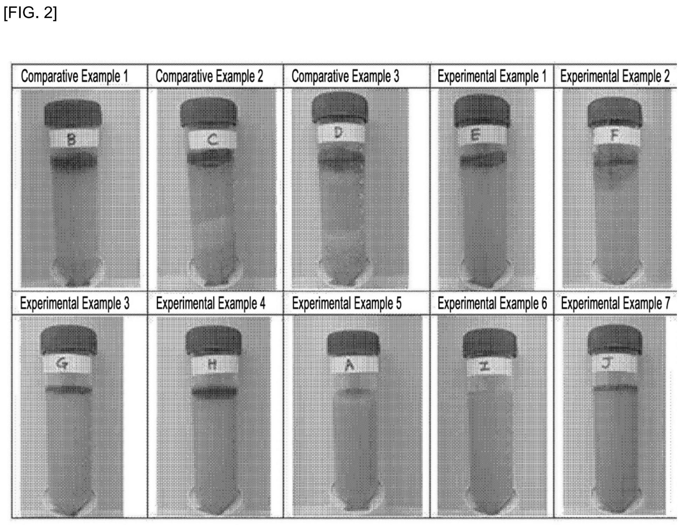

The results of the emulsion stability and sensory evaluation are numerically presented in Table 3, and the appearance of the centrifuged sauces evaluated for emulsion stability is shown in FIG. 2.

**[Table 3]**

| Sample name | Modified starch (%) | Xanthan gum (%) | Emulsion stability | Sensory evaluation |
|---|---|---|---|---|
| Comparative Example 1 | 0 | 0.12 | X not emulsified | X Sensory evaluation not possible |
| Comparative Example 2 | 0 | 0.06 | X not emulsified | X Sensory evaluation not possible |
| Comparative Example 3 | 0 | 0 | X not emulsified | X Sensory evaluation not possible |
| Experimental Example 1 | 1.5 | 0.12 | ○ poorly emulsified | 1(1 points/5 points) |
| Experimental Example 2 | 1.5 | 0.06 | ○ poorly emulsified | ○ rather difficult to perform sensory evaluation |
| Experimental Example 3 | 2.5 | 0.12 | **•••**(3 points/5 points) | 4 (4 points/5 points) |
| Experimental Example 4 | 2.5 | 0.06 | **••(2** points/5 points) | 4 |
| Experimental Example 5 | 2.75 | 0.12 | **•••••(5** points/5 points) | 5 (5 points/5 points) |
| Experimental Example 6 | 3.5 | 0.12 | **••••**(4 points/5 points) | 5 (5 points/5 points) |
| Experimental Example 7 | 3.5 | 0.06 | **•••**(3 points/5 points) | 4 (4 points/5 points) |

As shown in Table 3 and FIG. 2, Comparative Examples 1 to 3, which did not comprise the combination of modified starch and xanthan gum, exhibited very poor emulsion stability, such as layer separation observed after centrifugation due to the cheese not melting. In contrast, the cheese sauces of Experimental Examples, which comprised the combination of modified starch and xanthan gum, exhibited improved emulsion stability, cheese melting, and emulsion stability. In particular, it was confirmed that Experimental Examples 3 to 7, which comprised 2.5 wt% to 3.5 wt% of modified starch and 0.06 wt% to 0.12 wt% of xanthan gum, showed the very improved emulsion stability because phase separation rarely occurred.

Furthermore, Comparative Examples 1 to 3, which did not comprise the combination of modified starch and xanthan gum, were unable to undergo sensory evaluation because the cheese did not melt and did not maintain its shape after cooking. In contrast, the cheese sauces of Experimental Examples, which comprised the combination of modified starch and xanthan gum, exhibited improved emulsion stability and consistency stability, which led to sensory evaluations. In particular, Experimental Examples 3 to 7 achieved high sensory scores of 4 to 5, demonstrating excellent mouthfeel due to excellent flavor and consistency formation.

The above results of Examples 2 and 3 demonstrate that the use of modified starch and xanthan gum in combination is essential for preparing a chewy cheese sauce with excellent emulsion stability and flavor while well maintaining its consistency and shape even after cooking by heating. Furthermore, a combination of 2.5 wt% to 3.5 wt% of modified starch and 0.06 wt% to 0.12 wt% of xanthan gum was identified as a key factor in achieving this result.

In particular, it was confirmed that Experimental Example 5 is the optimal combination for preparing a high-consistency cheese sauce, since it formed both excellent consistency and post-cooking consistency, while having significantly improved emulsion stability and sensory scores.

### Example 4: Evaluation of Properties of Cheese Sauce according to Adjustment of Contents of Modified Starch and Xanthan Gum

Based on the results of Examples 2 and 3, cheese sauces were prepared by further adjusting the contents of modified starch and xanthan gum. Except for the contents of modified starch and xanthan gum, the preparation process and mixing ratio of Example 1 were maintained. The results of the consistency, degree of consistency formation, post-cooking consistency, post-cooking shape retention, and sensory evaluation of the prepared cheese sauces were compared with those of Experimental Examples 6 and 7 in Examples 2 and 3, and are shown in Table 4 below.

**[Table 4]**

| Sample name | Modified starch (%) | Xanthan gum (%) | Consist ency (cm) | Degree of consistency formation | Post-cooking consistenc y (cm) | Post-cooking shape retention | Sensory evaluation |
|---|---|---|---|---|---|---|---|
| Experimental Example 6 | 3.5 | 0.12 | 2.5 | ••••• (5 points/5 points) | 4.5 | •••• (4 points/5 points) | 5(5 points/5 points) |
| Experimental Example 7 | 3.5 | 0.06 | 3 | **••••(4** points/5 points) | 5 | •••• (4 points/5 points) | 4(4 points/5 points) |
| Comparative Example 4 | 3.5 | 0.15 | 1.5 | ••••• (5 points/5 points) | 4 | **•••••** (5 points/5 points) | 2(Although the consistency formation and post-cooking shape retention were good, the sensory evaluation score was low because the texture became hard, like rice cake) |

As shown in Table 4, unlike Experimental Examples 6 and 7, Comparative Example 4, which comprised 0.12 wt% or more of xanthan gum, exhibited excessively high consistency and post-cooking consistency, and the prepared cheese sauce became hard, like rice cake. Consequently, a sharp drop in the sensory evaluation score was observed.

Meanwhile, although not listed in Table 4, when modified starch was comprised in an amount of 3.5 wt% or more, the consistency was so strong that the operation of the mixer itself became difficult, making the preparation and physical property evaluation of the cheese sauce impossible.

### Example 5: Evaluation of Properties of Cheese Sauce According to Type of Gums and Starches

Next, it was intended to evaluate the properties of cheese sauces prepared by varying types and amounts of starches and gums. Cheese sauces were prepared using modified starch, and xanthan gum, carrageenan, tamarind, or powdered agar, and other ingredients as in Example 1. Cheese sauces were prepared using emulsified starch instead of modified starch, and other ingredients as in Example 1 (Table 5).

**[Table 5]**

| | **Content (%)** | | |
|---|---|---|---|
| Modified starch | 2.6 | 2.6 | 2.6 |
| Xanthan gum | 0.1 | 0.12 | 0.15 |
| **Consistency** | •• | ••• | •••• |
| Modified starch | 2.6 | 2.6 | 2.6 |
| Carrageenan | 0.1 | 0.12 | 0.15 |
| **Consistency** | ○ | ○ | ○ |
| Modified starch | 2.6 | 2.6 | 2.6 |
| Tamarind | 0.1 | 0.12 | 0.15 |
| **Consistency** | ○ | ○ | ○ |
| Modified starch | 2.6 | 2.6 | 2.6 |
| Powdered agar | 0.1 | 0.12 | 0.15 |
| **Consistency** | ○ | ○ | ○ |
| Emulsified starch | 2.3 | 2.3 | 2.3 |
| Xanthan gum | 0.1 | 0.12 | 0.15 |

As shown in Table 5, the combination of modified starch and xanthan gum exhibited the appropriate consistency suitable for cheese sauce. It was observed that carrageenan, powdered agar, and tamarind did not form a consistency even after heating at 85°C for 3 hours or more. In addition, gums, such as guar gum and gelatin, etc., also failed to form a consistency.

Meanwhile, when emulsified starch was used as the starch, a certain degree of consistency was observed in the sauce. However, it was observed that the sauce prepared using emulsified starch was nearly white, and thus a color suitable for appearance of cheese sauce was not formed.

In conclusion, the above results suggest that the combination of modified starch and xanthan gum is a key factor in achieving the appearance and consistency formation suitable for cheese sauce.

### Example 6: Evaluation of Consistency Stability and Emulsion Stability According to Heating Conditions Before Sterilization of Cheese Sauce

Next, it was intended to test heating conditions for improving consistency stability and emulsion stability in terms of the preparation method of cheese sauce.

To compare the effects of setting heating conditions prior to retort sterilization in the process of preparing the cheese sauce, cheese sauces were prepared using the same mixing ratio and process, while varying the heating conditions to 50°C, 60°C, 70°C, 80°C, and 90°C, respectively during the secondary heating period, which is immediately before retort sterilization. The experimental procedure was performed in the same manner as in Example 1, except that the heating conditions were adjusted.

The consistency, post-cooking consistency, degree of post-cooking shape retention, and sensory evaluation scores of each prepared cheese sauce are shown in Table 6.

**[Table 6]**

| Sample name | A | B | C | D | E |
|---|---|---|---|---|---|
| Heating conditions | Retort sterilization at 112°C for 30 min after reaching 80°C | Retort sterilization at 112°C for 30 min after reaching 50°C | Retort sterilization at 112°C for 30 min after reaching 60°C | Retort sterilization at 112 °C for 30 min after reaching 70°C | Retort sterilization at 112°C for 30 min after reaching 90°C |
| Consistency (cm) | 3.5 | Not measurable | 6.5 | 5 | Not measurable |
| Degree of consistency formation | •••• | Not gelatinized | • | ••• | Over-gelatinization and browning, oil separation |
| Post-cooking consistency (cm) | 5.5 | Not measurable | 8 | 7 | Not measurable |
| Post-cooking shape retention | •••• | Not measurable | • | ••• | Not measurable |
| Sensory evaluation (5-point scale) | 4.76 | 1.52 | 2.96 | 3.34 | 1.46 |

As shown in Table 6, when the heating temperature before sterilization was low, below 60°C, the modified starch in the sauce was not well gelatinized, and thus the consistency was not appropriate. When the temperature was higher than 80°C, the modified starch was over-gelatinized, making stirring difficult, and browning and oil separation were observed. In contrast, it was confirmed that when the heating temperature before sterilization was set to 60°C to 80°C, the modified starch in the cheese sauce was stably gelatinized, resulting in excellent consistency stability and emulsion stability. In particular, the sauce heated to 80°C meet a consistency range of 2.5 cm/30 sec to 4.0 cm/30 sec and a post-cooking consistency range of 4.5 cm/30 sec to 6.0 cm/30 sec, indicating excellent consistency. Accordingly, the flavor and mouthfeel in the sensory evaluation were also significantly improved.

### Example 7: Evaluation of Storage Stability of Cheese Sauce According to Sterilization Conditions

Subsequently, it was intended to test sterilization conditions that improve storage stability in the preparation of cheese sauce. To compare the effects of retort sterilization conditions in the process of preparing the cheese sauce, cheese sauces were prepared using the same mixing ratio and process while varying sterilization conditions: 110°C, 112°C, and 118°C, and physicochemical, microbiological, and sensory evaluations were conducted over different storage periods, and shown in Table 7. The experimental procedure was performed in the same manner as Example 1, except that the retort sterilization conditions were adjusted.

**[Table 7]**

| Sample name | A | B | C |
|---|---|---|---|
| Heating conditions | Retort sterilization at 112°C for 30 min after reaching 80°C | Retort sterilization at 110°C for 30 min after reaching 80°C | Retort sterilization at 118°C for 30 min after reaching 80°C |
| Storage temperature | 10°C, 15°C | 10°C, 15°C | - |
| Storage period | 117 days | 45 days | - |
| Microbiological Level (CFU/g) | | | |
| Aerobic bacteria | <10 | <10 | - |
| *Bacillus Cereus* | <10 | <10 | - |
| *Coliform* | <10 | <10 | - |
| *Clostridium perfringens* | <10 | <10 | - |
| Physicochemical | | | |
| pH | Meets standard | Meets standard | - |
| Sugar content | Meets standard | Meets standard | - |
| Salinity | Meets standard | Meets standard | - |
| Consistency | Meets standard | Meets standard | - |
| Result | Stable for 90 days under refrigerated storage | Stable for 30 days under refrigerated storage | Not suitable for commercializatio n due to significant browning and flavor deterioration |

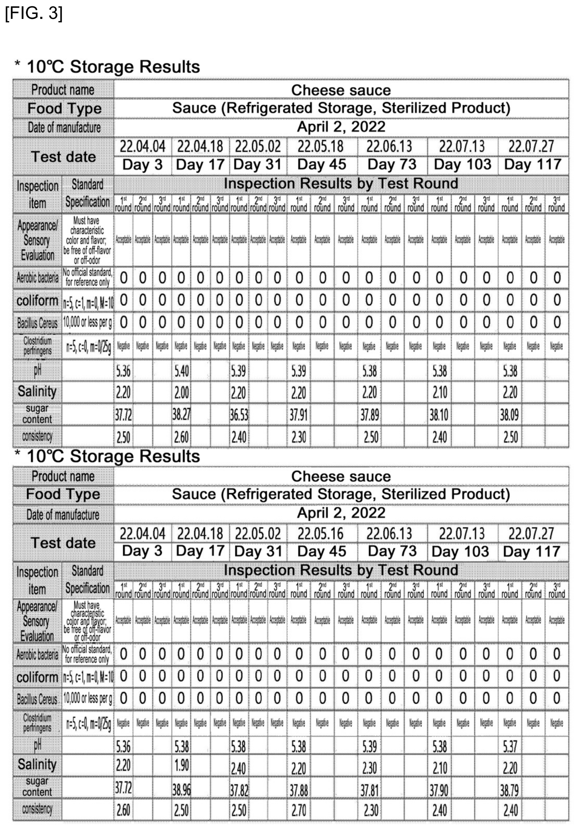

As shown in Table 7, the sauce prepared under the sterilization conditions of 118°C for 30 minutes showed the severe color browning and the poor flavor, making it impossible to commercialize the sauce itself. In contrast, under the sterilization conditions of 112°C or 110°C, the characteristics, such as stability against microbes, pH, sugar content, salinity, and consistency, etc., all meet standards, indicating that long-term storage under refrigeration is easy. In particular, it was observed that the storage stability was remarkably improved under the sterilization conditions of 112°C for 30 minutes, and the characteristics of the cheese sauce were well preserved even after 90 days of refrigeration storage. The detailed low-temperature storage results under the sterilization conditions of 112°C for 30 minutes are shown in FIG. 3.

Based on the above description, it will be understood by those skilled in the art that the present disclosure may be implemented in a different specific form without changing the technical spirit or essential characteristics thereof. In this regard, it should be understood that the above embodiment is not limitative, but illustrative in all aspects. The scope of the disclosure is defined by the appended claims rather than by the description preceding them, and therefore all changes and modifications that fall within metes and bounds of the claims, or equivalents of such metes and bounds are therefore intended to be embraced by the claims.

## Claims

1. A cheese sauce composition comprising raw cheese, modified starch, and xanthan gum.

2. The cheese sauce composition of claim 1, wherein the modified starch is comprised in an amount of 2.5 parts by weight to 3.5 parts by weight, based on the total 100 parts by weight of the cheese sauce composition.

3. The cheese sauce composition of claim 1, wherein the xanthan gum is comprised in an amount of 0.06 parts by weight to 0.12 parts by weight, based on the total 100 parts by weight of the cheese sauce composition.

4. The cheese sauce composition of claim 1, wherein a weight ratio of modified starch and xanthan gum is 1 : 0.015 - 0.05.

5. The cheese sauce composition of claim 1, wherein the raw cheese is comprised in an amount of 10 parts by weight to 30 parts by weight, based on the total 100 parts by weight of the cheese sauce composition.

6. The cheese sauce composition of claim 1, wherein the raw cheese comprises Cheddar cheese, Grana Padano cheese, Mozzarella cheese, Ricotta cheese, Camembert cheese, Emmental cheese, Gruyere cheese, cottage cheese, other processed cheeses, or a combination thereof.

7. The cheese sauce composition of claim 1, further comprising dairy products in addition to cheese.

8. The cheese sauce composition of claim 1, not comprising emulsifiers.

9. The cheese sauce composition of claim 1, wherein a consistency of the cheese sauce composition is 2.5 cm/30 sec to 4.0 cm/30 sec.

10. The cheese sauce composition of claim 1, wherein a post-cooking consistency of the cheese sauce composition is 4.5 cm/30 sec to 6 cm/30 sec.

11. The cheese sauce composition of claim 1, wherein the composition is a cheese sauce composition for hamburger.

12. A method of preparing a cheese sauce, the method comprising the steps of:
(a) obtaining a composition for preparing the cheese sauce by mixing raw cheese, xanthan gum, modified starch, and purified water,
(b) heating the composition, and
(c) sterilizing the heated composition by retort heating.

13. The method of claim 12, wherein in the step (a), the modified starch and xanthan gum are mixed in an amount of 2.5 parts by weight to 3.5 parts by weight, and 0.06 parts by weight to 0.12 parts by weight, respectively, based on the total 100 parts by weight of the cheese sauce composition.

14. The method of claim 12, wherein the step (a) comprises the steps of
(a-1) preparing a mixture by introducing raw cheese and xanthan gum into purified water,
(a-2) heating the mixture obtained in the step (a-1), and
(a-3) introducing modified starch, Cheddar cheese, and the remaining amount of purified water into the mixture which is heated in the step (a-2).

15. The method of claim 12, wherein in the step (b), the heating is to raise the temperature of the composition to 60°C to 80°C.

16. The method of claim 12, wherein in the step (c), the sterilization by retort heating is performed at 110°C to 115°C.

17. The method of claim 12, wherein a consistency of the cheese sauce composition undergone sterilization by retort heating in the step (c) is 2.5 cm/30sec to 4.0 cm/30sec.

18. The method of claim 12, wherein emulsifiers are not added.

19. A cheese sauce prepared by the method of preparing the cheese sauce of any one of claims 12 to 18.
